# EUROPEAN PATENT SPECIFICATION

(11) **EP 3 037 285 B1**
(45) Date of publication and mention of the grant of the patent: **18.12.2019**
(21) Application number: 14465530.5
(22) Date of filing: 23.12.2014
(51) Int. Cl.: B60C 23/06, B62D 37/02, B62D 35/00

(54) **Advanced driver assistance system for a vehicle and method for operating an advanced driver assistance system for a vehicle**
Erweitertes Fahrerunterstützungssystem für ein Fahrzeug und Verfahren zum Betrieb eines erweiterten Fahrerunterstützungssystems für ein Fahrzeug
Système d'assistance au conducteur avancée pour un véhicule et procédé pour faire fonctionner ledit système d'assistance au conducteur

(43) Date of publication of application: 29.06.2016
(73) Proprietor: Continental Automotive GmbH, 30165 Hannover (DE)
(72) Inventor: Cimponeriu, Andrei, 300344 Timisoara (RO); Apostolescu, Adrian, 300544 Timisoara (RO)

(56) References cited:
- WO-A1-2010/030158
- US-A- 4 810 022
- US-A1- 2010 024 538

## Description

The present invention relates to an advanced driver assistance system for a vehicle, a vehicle, a method for operating an advanced driver assistance system for a vehicle and a computer program product.

GB 2 495 983 A discloses a braking system for a land vehicle with wheels for reducing the stopping distance under emergency braking. The system comprises one or more braking elements which, when deployed, change the aerodynamic characteristics of the vehicle so as to enhance the frictional force between the wheels and the road and/or increases the aerodynamic drag of the vehicle, an actuator for deploying each of the braking elements and a control system for automatically actuating the or each actuator when at least one pre-set condition is met.

US 4 810 022 A discloses an advanced driver assistance system for a vehicle according to the preamble of claim 1.

US 2010/024538 A1 discloses a tire footprint determination method which comprises sampling a sensor during rotation, determining a percentage of samples within a target range, and calculating a circumferential portion of the rotation associated with the percentage of samples.

An object of the present invention is to provide an advanced driver assistance system for a vehicle, a vehicle, a method for operating an advanced driver assistance system for a vehicle and a computer program product which provide an improved stability of the vehicle during a motion of the vehicle.

This object is solved by the subject matter of the independent claims. Further advantageous features are the subject matter of the dependent claims.

According to an aspect of the invention, an advanced driver assistance system for a vehicle is provided, wherein the vehicle comprises at least one tire and at least one adaptable aerodynamics adaption unit for adapting a downforce acting on the vehicle during a motion of the vehicle. The advanced driver assistance system comprises a first determining unit for determining a parameter indicative of a footprint of the at least one tire and a control unit for controlling the at least one adaptable aerodynamics adaption unit based on the determined parameter.

The advanced driver assistance system according to said aspect of the invention provides an improved stability of the vehicle during a motion of the vehicle. This is achieved in particular by the first determining unit being configured to determine a parameter indicative of a footprint of the at least one tire and by the control unit being configured to control the at least one adaptable aerodynamics adaption unit based on the determined parameter. As will be explained in detail in the following, the footprint of the at least one tire is thus used by the control unit as a measure of the stability of the vehicle in order to adapt the at least one adaptable aerodynamics adaption unit to adapt the downforce acting on the vehicle.

In an embodiment, the first determining unit is configured to determine a length of the footprint of the at least one tire. The length of the footprint may be determined in a simple and effective manner, thus reducing the processing resources required to operate the advanced driver assistance system.

In a further embodiment, the first determining unit comprises at least one sensor selected from the group consisting of an acceleration sensor and a shock sensor. Said sensors are specifically suitable for determining the parameter indicative of the footprint.

In another embodiment, the first determining unit is arranged at an inner side of a tire wall of the at least one tire. Thereby, the parameter indicative of the footprint may be determined with very high accuracy.

In a further embodiment, the control unit is a closed loop controller for controlling the at least one adaptable aerodynamics adaption unit based on the determined parameter. Thereby, the stability of the vehicle may be further improved.

The advanced driver assistance system may further comprise a second determining unit for determining a speed of the vehicle and the control unit may further be configured to control the at least one adaptable aerodynamics adaption unit based on the determined speed of the vehicle. Thereby, the speed of the vehicle may advantageously be taken into account when the downforce acting on the vehicle is adapted by the at least one adaptable aerodynamics adaption unit.

The control unit may be configured to determine a nominal value of the footprint of the at least one tire based on the determined speed of the vehicle. In particular, the control unit may be configured to determine a nominal value of the length of the footprint of the at least one tire based on the determined speed of the vehicle. In said embodiment, a dependence of the footprint of the at least one tire on the speed of the vehicle may advantageously be taken into account when controlling the at least one adaptable aerodynamics adaption unit. A dependence of the footprint of the at least one tire on the speed of the vehicle may arise from the effect, that, with increasing velocity, a steel mesh of the tire may become stiffer, thereby reducing the length of the footprint. Said reduction of the length of the footprint may thus be considered by the control unit when determining the nominal value of the footprint of the at least one tire. According to a further aspect of the invention, a vehicle is provided. The vehicle comprises at least one tire, at least one adaptable aerodynamics adaption unit for adapting a downforce acting on the vehicle during a motion of the vehicle, and an advanced driver assistance system according to any of the embodiments mentioned above.

In an embodiment, the at least one adaptable aerodynamics adaption unit comprises at least one adaptable air guiding device. Thereby, the downforce acting on the vehicle may be adapted in an efficient manner.

In particular, the at least one adaptable air guiding device may comprise at least one adaptable spoiler and/or at least one adaptable flap, for example at least one adaptable roof flap, and/or at least one adaptable wing.

The vehicle may be a motor vehicle, in particular a passenger car or a commercial road vehicle.

A method for operating an advanced driver assistance system for a vehicle is also provided. The vehicle comprises at least one tire and at least one adaptable aerodynamics adaption unit for adapting a downforce acting on the vehicle during a motion of the vehicle. The method comprises determining a parameter indicative of a footprint of the at least one tire by a first determining unit of the advanced driver assistance system and controlling the at least one adaptable aerodynamics adaption unit based on the determined parameter by a control unit of the advanced driver assistance system.

In an embodiment, determining the parameter comprises determining a length of the footprint of the at least one tire. The length of the footprint may be determined in a simple and effective manner, thus reducing the processing resources required to operate the advanced driver assistance system.

In another embodiment, the method further comprises determining a speed of the vehicle by a second determining unit of the advanced driver assistance system and controlling the at least one adaptable aerodynamics adaption unit based on the determined speed of the vehicle. Thereby, the speed of the vehicle may advantageously be taken into account when the downforce acting on the vehicle is adapted by the at least one adaptable aerodynamics adaption unit.

Controlling the at least one adaptable aerodynamics adaption unit based on the determined speed of the vehicle may comprise determining a nominal value of the footprint of the at least one tire based on the determined speed of the vehicle. In said embodiment, a dependence of the footprint of the at least one tire on the speed of the vehicle may advantageously be taken into account when controlling the at least one adaptable aerodynamics adaption unit.

In particular, determining the nominal value of the footprint of the at least one tire may comprise determining a nominal value of the length of the footprint of the at least one tire based on the determined speed of the vehicle.

A computer program product is also provided that comprises code tangibly embodied thereon, that when executed on a processor, causes the processor to perform a method according to one of the embodiments described above.

The vehicle, the method and the computer program product according to said aspects of the invention provide an improved stability of the vehicle during a motion of the vehicle as already discussed in connection with the embodiments of the advanced driver assistance system mentioned above.

Embodiments will now be described with reference to the accompanying drawings.
- Figure 1A: illustrates a schematic diagram of a vehicle according to an embodiment of the invention.
- Figure 1B: illustrates a schematic diagram of one of the wheels of the vehicle illustrated in Figure 1A.
- Figure 2: illustrates a schematic diagram of an advanced driver assistance system according to an embodiment of the invention.
- Figure 3: is a flowchart illustrating a method for operating an advanced driver assistance system for a vehicle according to an embodiment of the invention.

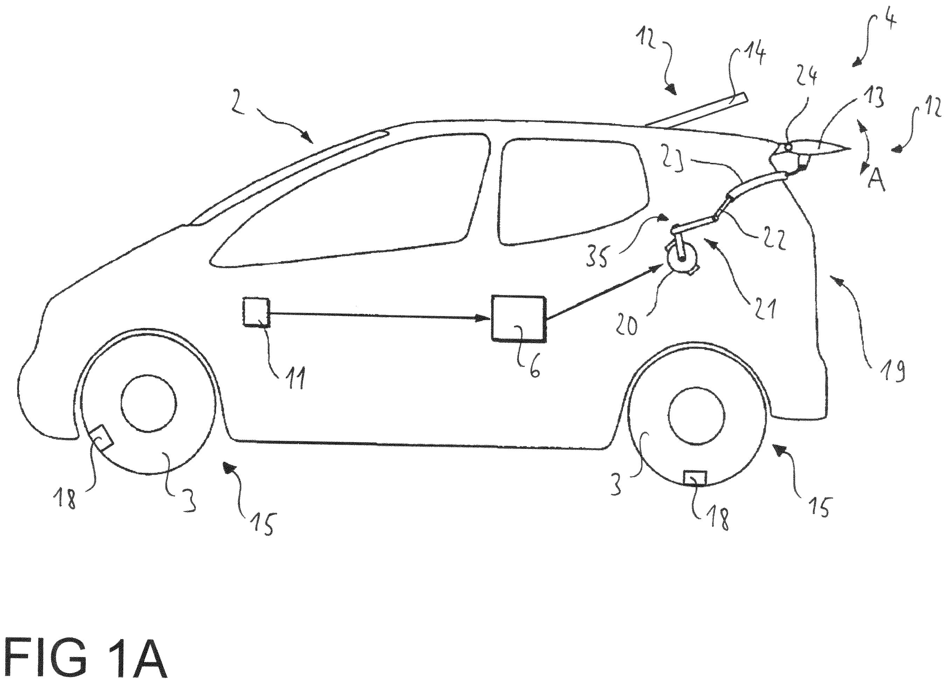

Figure 1A illustrates a schematic diagram of a vehicle 2 according to an embodiment of the invention.

In the illustrated embodiment, the vehicle 2 is a passenger car. The vehicle 2 comprises four wheels 15, of which a front wheel and a rear wheel are illustrated in Figure 1A.

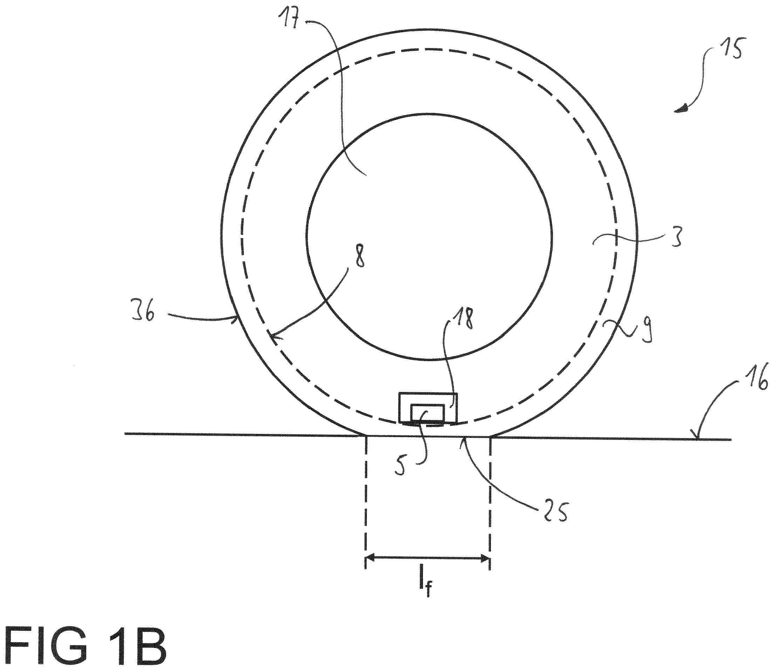

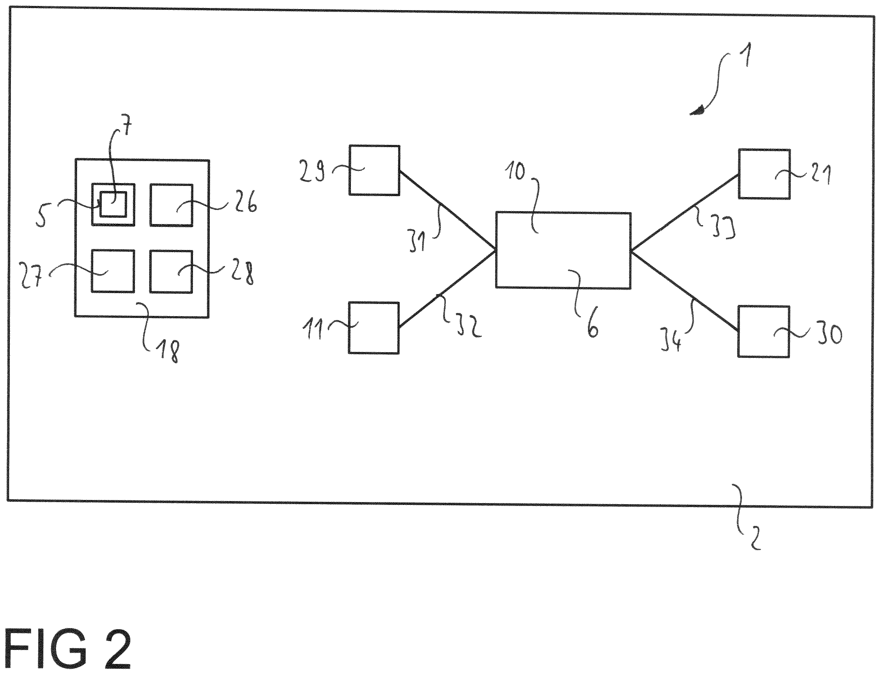

The wheels 15 each comprise a pneumatic tire 3. In each tire 3, a tire module 18 is arranged. The tire module 18 comprises a first determining unit for determining a parameter indicative of a footprint of the respective tire 3. For reasons of clarity, the first determining unit is not illustrated in Figure 1A and will be explained in further details with reference to the following figures, in particular with reference to Figure 1B and Figure 2.

The vehicle 2 further comprises an adaptable aerodynamics adaption unit 4 for adapting a downforce acting on the vehicle 2 during a motion of the vehicle 2.

In the illustrated embodiment, the adaptable aerodynamics adaption unit 4 comprises two adaptable air guiding devices 12, namely an adaptable spoiler 13 and an adaptable flap 14. The spoiler 13 is arranged at a rear end 19 of the vehicle 2 and the flap 14 is a roof flap of the vehicle 2.

In a further embodiment, the adaptable aerodynamics adaption unit 4 comprises at least one adaptable wing additionally or alternatively to the adaptable spoiler 13 and the adaptable flap 14.

The adaptable spoiler 13 is rotatable around an axis 24 as illustrated schematically by an arrow A by means of an actuator 21. The actuator 21 comprises an electric motor 20, for example a stepping motor, which is coupled to the spoiler 13 via a crank drive 35 and Bowden cables 22, 23.

The actuator 21 is controlled by a control unit 6 of the vehicle 2, for example by a body control module of the vehicle 2.

The adaptable roof flap 14 is rotatable around an axis (not illustrated) by means of a further actuator in a way that corresponds to the rotation of the adaptable spoiler 13 by the actuator 21. The further actuator is not illustrated in Figure 1A for reasons of clarity and is also controlled by the control unit 6.

As will be explained in detail in the following, the control unit 6 is configured to control the adaptable aerodynamics adaption unit 4 based on the determined parameters indicative of the respective footprint of the four tires 3 of the vehicle 2. Moreover, in the illustrated embodiment, the control unit 6 is configured to control the adaptable aerodynamics adaption unit 4 based on the speed of the vehicle 2. To this end, the control unit 6 is coupled to a second determining unit 11 of the vehicle 2, wherein the second determining unit 11 is configured to determine the speed of the vehicle 2. In particular, the control unit 6 is configured to determine and set a nominal value of the footprint of the respective tire 3 based on the determined speed of the vehicle 2. The nominal value is also referred to as a target value or a reference value of the control unit 6.

Figure 1B illustrates a schematic enlarged diagram of one of the wheels 15 of the vehicle 2 illustrated in Figure 1A. Components with the same function as in Figure 1A are designated with the same reference signs and are not explained again in the following.

As illustrated in Figure 1B, the pneumatic tire 3 of the wheel 15 comprises a tire wall 9. The tire wall 9 has an inner side 8 and an outer side 36 opposite the inner side 8. The inner side 8 is illustrated schematically by a dashed line and the outer side 36 is illustrated schematically by a continuous line in Figure 1B. The outer side 36 provides a tread of the pneumatic tire 3. The pneumatic tire 3 is mounted on a rim 17 of the wheel 15.

A tire module 18 is mounted on the inner side 8 of the tire wall 9. For example, the tire module 18 is glued on the inner side 8. As explained in more detail below, a length l_{f} of a footprint 25 of the tire 3 may be determined by a determining unit 5 of the tire module 18, when the tire module 18 is arranged adjacent a road surface 16 on which the pneumatic tire 3 travels. For example, the determining unit 5 may determine when the tire module 18 enters and exits the footprint 25. Thus, a time period in which the tire module 18 is arranged adjacent the footprint 25 may be determined. Typically, the length l_{f} of the footprint 25 is determined as a fraction of a full revolution of the tire 3. The footprint 25 of the tire 3 is also referred to as a current contact patch of the tire 3.

Figure 2 illustrates a schematic diagram of an advanced driver assistance system 1 of the vehicle 2 illustrated in Figure 1A according to an embodiment of the invention. Components with the same function as in Figures 1A and 1B are designated with the same reference signs and are not explained again in the following. For reasons of clarity, the vehicle 2 is illustrated schematically in Figure 2. Moreover, the aerodynamics adaption unit and the wheels of the vehicle 2 are not illustrated again in detail in Figure 2.

The advanced driver assistance system 1 comprises a first determining unit 5 for determining a parameter indicative of a footprint of a tire of the vehicle 2 to which the first determining unit 5 is mounted. Moreover, the advanced driver assistance system 1 comprises a control unit 6 for controlling the adaptable aerodynamics adaption unit based on the determined parameter.

In the illustrated embodiment, the first determining unit 5 is configured to determine a length of the footprint of the respective tire. To this end, the first determining unit 5 comprises a sensor 7 selected from the group consisting of an acceleration sensor and a shock sensor. Typically, the length of the footprint is determined as a fraction of a full revolution of the tire.

The first determining unit 5 is part of a tire module 18. Typically, the vehicle 2 comprises one tire module 18 for each of the tires of the vehicle 2. For reasons of clarity, only one tire module 18 is illustrated in detail in Figure 2.

In the illustrated embodiment, the tire module 18 which may also be referred to as Wheel Unit (WU) is part of a tire pressure monitoring system (TPMS) of the vehicle 2, which is also referred to as tire information system (TIS) . To this end, the tire module 18 further comprises a pressure sensor 27 for determining a pressure of the pneumatic tire. Moreover, the tire module 18 may comprise a temperature sensor (not illustrated) for determining a temperature of the respective pneumatic tire.

Additionally, the tire module 18 comprises an electrical energy storage device 28 providing power to the aforementioned components of the tire module 18, for example a battery. The tire module 18 may further comprise an energy converter (not illustrated) for providing power to the aforementioned components of the tire module 18 by converting mechanical energy into electrical energy. For example, the energy converter may be a bending piezoelectric stripe.

The tire module 18 further comprises transmitting means 26 in the form of an RF transmitter configured to wirelessly transmit the determined length of the footprint as well as the determined pressure and possibly the determined temperature of the pneumatic tire to a receiver 29 of the vehicle 2.

In the illustrated embodiment, the control unit 6 is a closed loop controller 10 for controlling the adaptable aerodynamics adaption unit based on the determined parameter indicative of the footprint of the respective tire to which the tire module 18 is mounted. To this end, the control unit 6 is connected to the receiver 29 by a signal line 31, to the actuator 21 of the spoiler illustrated in Figure 1A by a signal line 33 and to a further actuator 30 of the roof flap illustrated in Figure 1A by a signal line 34.

The control unit 6 is further configured to control the adaptable aerodynamics adaption unit based on a current speed of the vehicle 2. To this end, the control unit 6 is connected to a second determining unit 11 for determining a speed of the vehicle 2 by a signal line 32. In the illustrated embodiment, the control unit 6 is configured to determine and set a nominal value of the footprint of the respective tire based on the determined speed of the vehicle 2. In particular, the control unit 6 may be configured to determine and set a nominal value of the length of the footprint of the respective tire based on the determined speed of the vehicle 2.

To this end, the control unit 6 may comprise a storage device (not illustrated) storing a table or a diagram containing a plurality of nominal values of the length of the footprint, wherein each nominal value is assigned to a certain speed of the vehicle 2. The storage device may contain a plurality of said tables or diagrams, each table or diagram being assigned to a specific type of tire and the control unit 6 may select the appropriate table or diagram based on a type of the currently mounted tire. Information about the type of the currently mounted tire may be provided by the tire module 18 and/or by an input of a user of the vehicle 2.

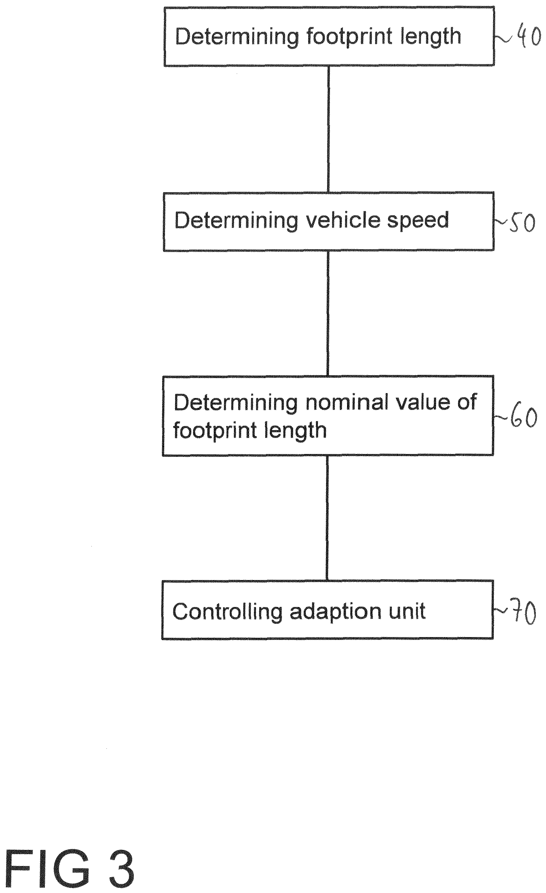

Figure 3 is a flowchart illustrating a method for operating an advanced driver assistance system for a vehicle according to an embodiment of the invention.

The vehicle comprises at least one tire and at least one adaptable aerodynamics adaption unit for adapting a downforce acting on the vehicle during a motion of the vehicle. The at least one adaptable aerodynamics adaption unit may comprise at least one adaptable air guiding device, for example at least one adaptable spoiler and/or at least one adaptable flap and/or at least one adaptable wing. The vehicle may be a motor vehicle, in particular a passenger car or a commercial road vehicle.

The method comprises a step 40 of determining a parameter indicative of a footprint of the at least one tire by a first determining unit of the advanced driver assistance system. In the illustrated embodiment, determining the parameter comprises determining a length of the footprint of the at least one tire.

Moreover, in the illustrated embodiment, the method further comprises a step 50 of determining a speed of the vehicle by a second determining unit of the advanced driver assistance system and a step 60 of determining and setting a nominal value of the footprint of the at least one tire based on the determined speed of the vehicle. In the illustrated embodiment, determining and setting the nominal value of the footprint of the at least one tire comprises determining and setting a nominal value of the length of the footprint of the at least one tire based on the determined speed of the vehicle.

The method further comprises a step 70 of controlling the at least one adaptable aerodynamics adaption unit based on the determined parameter by a control unit of the advanced driver assistance system. In the illustrated embodiment, controlling the at least one adaptable aerodynamics adaption unit is further based on the determined speed of the vehicle as discussed in connection with step 60.

Controlling the at least one adaptable aerodynamics adaption unit may comprise adapting a position of the at least one adaptable air guiding device, for example adapting a position of the at least one adaptable spoiler and/or of the at least one adaptable flap and/or of the at least one adaptable wing, in particular adapting a pitch of the at least one adaptable spoiler and/or of the at least one adaptable flap and/or of the at least one adaptable wing by rotating the spoiler and/or the flap and/or the wing around the respective rotation axis.

The steps 40 to 70 are performed repeatedly during motion of the vehicle.

The illustrated embodiments thus provide tire-road contact information available from a tire information system in particular for a spoiler feedback loop and optimized vehicle stability, in particular optimized high-speed car stability, i.e. an improved stability at high velocities using for example spoilers.

Spoilers are typically used to increase the contact between the tire and the road at high speeds. Hence, information related to the tire-road contact is a very suitable measure of the efficiency of the spoiler. This information is used according to embodiments of the invention as an input to control the position of the spoiler in a feedback loop that optimizes tire-road contact and high-speed car stability.

Thus, information about the tire-road contact is used to assess the effect of the spoiler position. According to embodiments of the invention, a closed-loop control is built to control the position of the spoiler in such a way that tire-road contact and high-speed car stability are optimized. A framework is thus created where the position of the spoiler is adjusted optimally and where tire-road contact is used to enhance the car stability in various driving conditions.

Tire-road contact information may be provided directly by the footprint length in embodiments of the invention.

Moreover, the invention may be applied to other means of adapting the shape or dynamics of the vehicle, whose purpose is to enhance the tire-road contact.

### List of reference signs

- 1: advanced driver assistance system
- 2: vehicle
- 3: tire
- 4: aerodynamics adaption unit
- 5: determining unit
- 6: control unit
- 7: sensor
- 8: inner side
- 9: tire wall
- 10: closed loop controller
- 11: determining unit
- 12: air guiding device
- 13: spoiler
- 14: flap
- 15: wheel
- 16: road surface
- 17: rim
- 18: tire module
- 19: rear end
- 20: electric motor
- 21: actuator
- 22: Bowden cable
- 23: Bowden cable
- 24: axis
- 25: footprint
- 26: transmitting means
- 27: sensor
- 28: energy storage device
- 29: receiver
- 30: actuator
- 31: signal line
- 32: signal line
- 33: signal line
- 34: signal line
- 35: crank drive
- 36: outer side
- 40: step
- 50: step
- 60: step
- 70: step

- A: arrow
- l_{f}: length

## Claims

1. An advanced driver assistance system (1) for a vehicle (2), the vehicle (2) comprising at least one tire (3) and at least one adaptable aerodynamics adaption unit (4) for adapting a downforce acting on the vehicle (2) during a motion of the vehicle (2), **characterized in that** the advanced driver assistance system (1) comprises:
- a first determining unit (5) for determining a parameter indicative of a footprint (25) of the at least one tire (3),
- a control unit (6) for controlling the at least one adaptable aerodynamics adaption unit (4) based on the determined parameter.

2. The advanced driver assistance system according to claim 1, wherein the first determining unit (5) is configured to determine a length of the footprint (25) of the at least one tire (3).

3. The advanced driver assistance system according to claim 1 or claim 2, wherein the first determining unit (5) comprises at least one sensor (7) selected from the group consisting of an acceleration sensor and a shock sensor.

4. The advanced driver assistance system according to any of the preceding claims, wherein the first determining unit (5) is arranged at an inner side (8) of a tire wall (9) of the at least one tire (3).

5. The advanced driver assistance system according to any of the preceding claims, wherein the control unit (6) is a closed loop controller (10) for controlling the at least one adaptable aerodynamics adaption unit (4) based on the determined parameter.

6. The advanced driver assistance system according to any of the preceding claims, further comprising a second determining unit (11) for determining a speed of the vehicle (2), wherein the control unit (6) is further configured to control the at least one adaptable aerodynamics adaption unit (4) based on the determined speed of the vehicle (2).

7. The advanced driver assistance system according to claim 6, wherein the control unit (6) is configured to determine a nominal value of the footprint (25) of the at least one tire (3) based on the determined speed of the vehicle (2).

8. A vehicle comprising:
- at least one tire (3),
- at least one adaptable aerodynamics adaption unit (4) for adapting a downforce acting on the vehicle (2) during a motion of the vehicle (2),
- an advanced driver assistance system (1) according to any of the preceding claims.

9. The vehicle according to claim 8, wherein the at least one adaptable aerodynamics adaption unit (4) comprises at least one adaptable air guiding device (12).

10. The vehicle according to claim 9, wherein the at least one adaptable air guiding device (12) comprises at least one adaptable spoiler (13) and/or at least one adaptable flap (14) and/or at least one adaptable wing.

11. A method for operating an advanced driver assistance system (1) for a vehicle (2), the vehicle (2) comprising at least one tire (3) and at least one adaptable aerodynamics adaption unit (4) for adapting a downforce acting on the vehicle (2) during a motion of the vehicle (2), **characterized in that** the method comprises:
- determining a parameter indicative of a footprint (25) of the at least one tire (3) by a first determining unit (5) of the advanced driver assistance system (1),
- controlling the at least one adaptable aerodynamics adaption unit (4) based on the determined parameter by a control unit (6) of the advanced driver assistance system (1).

12. The method according to claim 11, wherein determining the parameter comprises determining a length of the footprint (25) of the at least one tire (3).

13. The method according to claim 11 or claim 12, further comprising determining a speed of the vehicle (2) by a second determining unit (11) of the advanced driver assistance system (1) and controlling the at least one adaptable aerodynamics adaption unit (4) based on the determined speed of the vehicle (2).

14. The method according to claim 13, wherein controlling the at least one adaptable aerodynamics adaption unit (4) based on the determined speed of the vehicle (2) comprises determining a nominal value of the footprint (25) of the at least one tire (3) based on the determined speed of the vehicle (2).

15. A computer program product, comprising code tangibly embodied thereon, that when executed on a processor, causes the processor to perform a method according to any one of claims 11 to 14.

## Patentansprüche

1. Erweitertes Fahrerunterstützungssystem (1) für ein Fahrzeug (2), wobei das Fahrzeug (2) mindestens einen Reifen (3) und mindestens eine anpassungsfähige aerodynamische Anpassungseinheit (4) zum Anpassen einer Abwärtskraft aufweist, die während einer Bewegung des Fahrzeugs (2) auf das Fahrzeug (2) wirkt, **dadurch gekennzeichnet, dass** das erweiterte Fahrerunterstützungssystem (1) Folgendes aufweist:
- eine erste Bestimmungseinheit (5) zum Bestimmen eines Parameters, der eine Aufstandsfläche (25) des mindestens einen Reifens (3) angibt,
- eine Steuereinheit (6) zum Steuern der mindestens einen anpassungsfähigen aerodynamischen Anpassungseinheit (4) basierend auf dem bestimmten Parameter.

2. Erweitertes Fahrerunterstützungssystem nach Anspruch 1, wobei die erste Bestimmungseinheit (5) ausgebildet ist, um eine Länge der Aufstandsfläche (25) des mindestens einen Reifens (3) zu bestimmen.

3. Erweitertes Fahrerunterstützungssystem nach Anspruch 1 oder Anspruch 2, wobei die erste Bestimmungseinheit (5) mindestens einen Sensor (7) aufweist, der aus der Gruppe ausgewählt ist, die aus einem Beschleunigungssensor und einem Schocksensor besteht.

4. Erweitertes Fahrerunterstützungssystem nach einem der vorhergehenden Ansprüche, wobei die erste Bestimmungseinheit (5) an einer Innenseite (8) einer Reifenflanke (9) des mindestens einen Reifens (3) angeordnet ist.

5. Erweitertes Fahrerunterstützungssystem nach einem der vorhergehenden Ansprüche, wobei die Steuereinheit (6) eine Steuerung (10) mit geschlossenem Regelkreis zum Steuern der mindestens einen anpassungsfähigen aerodynamischen Anpassungseinheit (4) basierend auf dem bestimmten Parameter ist.

6. Erweitertes Fahrerunterstützungssystem nach einem der vorhergehenden Ansprüche, ferner eine zweite Bestimmungseinheit (11) zum Bestimmen einer Geschwindigkeit des Fahrzeugs (2) aufweisend, wobei die Steuereinheit (6) ferner ausgebildet ist, um die mindestens eine anpassungsfähige aerodynamische Anpassungseinheit (4) basierend auf der bestimmten Geschwindigkeit des Fahrzeugs (2) zu steuern.

7. Erweitertes Fahrerunterstützungssystem nach Anspruch 6, wobei die Steuereinheit (6) ausgebildet ist, um einen Sollwert der Aufstandsfläche (25) des mindestens einen Reifens (3) basierend auf der bestimmten Geschwindigkeit des Fahrzeugs (2) zu bestimmen.

8. Fahrzeug, Folgendes aufweisend:
- mindestens einen Reifen (3),
- mindestens eine anpassungsfähige aerodynamische Anpassungseinheit (4) zum Anpassen einer Abwärtskraft, die während einer Bewegung des Fahrzeugs (2) auf das Fahrzeug (2) wirkt,
- ein erweitertes Fahrerunterstützungssystem (1) nach einem der vorhergehenden Ansprüche.

9. Fahrzeug nach Anspruch 8, wobei die mindestens eine anpassungsfähige aerodynamische Anpassungseinheit (4) mindestens eine anpassungsfähige Luftführungsvorrichtung (12) aufweist.

10. Fahrzeug nach Anspruch 9, wobei die mindestens eine anpassungsfähige Luftführungsvorrichtung (12) mindestens einen anpassungsfähigen Spoiler (13) und/oder mindestens eine anpassungsfähige Klappe (14) und/oder mindestens einen anpassungsfähigen Flügel aufweist.

11. Verfahren zum Betreiben eines erweiterten Fahrerunterstützungssystems (1) für ein Fahrzeug (2), wobei das Fahrzeug (2) mindestens einen Reifen (3) und mindestens eine anpassungsfähige aerodynamische Anpassungseinheit (4) zum Anpassen einer Abwärtskraft aufweist, die während einer Bewegung des Fahrzeugs (2) auf das Fahrzeug (2) wirkt, **dadurch gekennzeichnet, dass** das Verfahren Folgendes aufweist:
- Bestimmen eines Parameters, der eine Aufstandsfläche (25) des mindestens einen Reifens (3) angibt, durch eine erste Bestimmungseinheit (5) des erweiterten Fahrerunterstützungssystems (1),
- Steuern der mindestens einen anpassungsfähigen aerodynamischen Anpassungseinheit (4) basierend auf dem bestimmten Parameter durch eine Steuereinheit (6) des erweiterten Fahrerunterstützungssystems (1).

12. Verfahren nach Anspruch 11, wobei das Bestimmen des Parameters das Bestimmen einer Länge der Aufstandsfläche (25) des mindestens einen Reifens (3) aufweist.

13. Verfahren nach Anspruch 11 oder Anspruch 12, ferner das Bestimmen einer Geschwindigkeit des Fahrzeugs (2) durch eine zweite Bestimmungseinheit (11) des erweiterten Fahrerunterstützungssystems (1) und das Steuern der mindestens einen anpassungsfähigen aerodynamischen Anpassungseinheit (4) basierend auf der bestimmten Geschwindigkeit des Fahrzeugs (2) aufweisend.

14. Verfahren nach Anspruch 13, wobei das Steuern der mindestens einen anpassungsfähigen aerodynamischen Anpassungseinheit (4) basierend auf der bestimmten Geschwindigkeit des Fahrzeugs (2) das Bestimmen eines Sollwertes der Aufstandsfläche (25) des mindestens einen Reifens (3) basierend auf der bestimmten Geschwindigkeit des Fahrzeugs (2) aufweist.

15. Computerprogrammprodukt, Code aufweisend, der dinglich darauf verkörpert ist, der bei Ausführung auf einem Prozessor den Prozessor veranlasst, ein Verfahren nach einem der Ansprüche 11 bis 14 durchzuführen.

## Revendications

1. Système d'assistance au conducteur avancée (1) pour un véhicule (2), le véhicule (2) comprenant au moins un pneu (3) et au moins une unité d'adaptation aérodynamique adaptable (4) permettant d'adapter une force descendante agissant sur le véhicule (2) pendant un mouvement du véhicule (2), **caractérisé en ce que** le système d'assistance au conducteur avancée (1) comprend :
- une première unité de détermination (5) permettant de déterminer un paramètre indiquant une empreinte (25) de l'au moins un pneu (3),
- une unité de commande (6) permettant de commander l'au moins une unité d'adaptation aérodynamique adaptable (4) sur la base du paramètre déterminé.

2. Système d'assistance au conducteur avancée selon la revendication 1, la première unité de détermination (5) étant configurée pour déterminer une longueur de l'empreinte (25) de l'au moins un pneu (3).

3. Système d'assistance au conducteur avancée selon la revendication 1 ou la revendication 2, la première unité de détermination (5) comprenant au moins un capteur (7) sélectionné à partir du groupe se composant d'un capteur d'accélération et d'un capteur de choc.

4. Système d'assistance au conducteur avancée selon l'une quelconque des revendications précédentes, la première unité de détermination (5) étant disposée sur un côté intérieur (8) d'une paroi du pneu (9) de l'au moins un pneu (3).

5. Système d'assistance au conducteur avancée selon l'une quelconque des revendications précédentes, l'unité de commande (6) étant un dispositif de commande en boucle fermée (10) permettant de commander l'au moins une unité d'adaptation aérodynamique adaptable (4) sur la base du paramètre déterminé.

6. Système d'assistance au conducteur avancée selon l'une quelconque des revendications précédentes, comprenant en outre une seconde unité de détermination (11) permettant de déterminer une vitesse du véhicule (2), l'unité de commande (6) étant configurée en outre pour commander l'au moins une unité d'adaptation aérodynamique adaptable (4) sur la base de la vitesse déterminée du véhicule (2).

7. Système d'assistance au conducteur avancée selon la revendication 6, l'unité de commande (6) étant configurée pour déterminer une valeur nominale de l'empreinte (25) de l'au moins un pneu (3) sur la base de la vitesse déterminée du véhicule (2) .

8. Véhicule comprenant :
- au moins un pneu (3),
- au moins une unité d'adaptation aérodynamique adaptable (4) permettant d'adapter une force descendante agissant sur le véhicule (2) pendant un mouvement du véhicule (2),
- un système d'assistance au conducteur avancée (1) selon l'une quelconque des revendications précédentes.

9. Véhicule selon la revendication 8, l'au moins une unité d'adaptation aérodynamique adaptable (4) comprenant au moins un dispositif de guidage d'air adaptable (12).

10. Véhicule selon la revendication 9, l'au moins un dispositif de guidage d'air adaptable (12) comprenant au moins un déflecteur adaptable (13) et/ou au moins un rabat adaptable (14) et/ou au moins une aile adaptable.

11. Procédé permettant de faire fonctionner un système d'assistance au conducteur avancée (1) pour un véhicule (2), le véhicule (2) comprenant au moins un pneu (3) et au moins une unité d'adaptation aérodynamique adaptable (4) permettant d'adapter une force descendante agissant sur le véhicule (2) pendant un mouvement du véhicule (2), **caractérisé en ce que** le procédé comprend :
- la détermination d'un paramètre indiquant une empreinte (25) de l'au moins un pneu (3) par une première unité de détermination (5) du système d'assistance au conducteur avancée (1),
- la commande de l'au moins une unité d'adaptation aérodynamique adaptable (4) sur la base du paramètre déterminé par une unité de commande (6) du système d'assistance au conducteur avancée (1).

12. Procédé selon la revendication 11, la détermination du paramètre comprenant la détermination d'une longueur de l'empreinte (25) de l'au moins un pneu (3).

13. Procédé selon la revendication 11 ou la revendication 12, comprenant en outre la détermination d'une vitesse du véhicule (2) par une seconde unité de détermination (11) du système d'assistance au conducteur avancée (1) et la commande de l'au moins une unité d'adaptation aérodynamique adaptable (4) sur la base de la vitesse déterminée du véhicule (2).

14. Procédé selon la revendication 13, la commande de l'au moins une unité d'adaptation aérodynamique adaptable (4) basée sur la vitesse déterminée du véhicule (2) comprenant la détermination d'une valeur nominale de l'empreinte (25) de l'au moins un pneu (3) sur la base de la vitesse déterminée du véhicule (2).

15. Produit de programme informatique, comprenant un code incorporé de manière tangible sur celui-ci qui, lorsqu'il est exécuté sur un processeur, amène le processeur à mettre en œuvre un procédé selon l'une quelconque des revendications 11 à 14.
